Europäisches Patentamt

(19) European Patent Office

Office européen des brevets

(11) Numéro de publication : **0 304 385 B1**

(12) **FASCICULE DE BREVET EUROPEEN**

(45) Date de publication du fascicule du brevet :
29.05.91 Bulletin 91/22

(51) Int. Cl.⁵ : **B29C 49/64, B29C 49/76**

(21) Numéro de dépôt : **88470015.4**

(22) Date de dépôt : **21.07.88**

(54) **Dispositif pour le traitement thermique du col des préformes.**

(30) Priorité : 07.08.87 FR 8711393

(43) Date de publication de la demande :
22.02.89 Bulletin 89/08

(45) Mention de la délivrance du brevet :
29.05.91 Bulletin 91/22

(84) Etats contractants désignés :
DE ES GB GR IT NL

(56) Documents cités :
EP-A- 0 066 982
FR-A- 2 429 660
FR-A- 2 580 545
PATENT ABSTRACTS OF JAPAN, vol. 8, no. 12
(M-269)[1449], 19 janvier 1984; & JP-A-58 173
628 (TOUYOU SEIKAN K.K.) 12-10-1983

(56) Documents cités :
PATENT ABSTRACTS OF JAPAN, vol. 8, no. 69
(M-286)[1506], 31 mars 1984; & JP-A-58 217 326
(TOUYOU SEIKAN K.K.) 17-12-1983
PATENT ABSTRACTS OF JAPAN, vol. 8, no. 73
(M-287)[1510], 5 avril 1984; & JP-A-58 220 710
(NIPPON ESTER K.K.) 22-12-1983

(73) Titulaire : SIDEL
55, rue du Pont VI
F-76600 Le Havre (FR)

(72) Inventeur : Denis, Gérard
22, rue Georges Pompidou
F-76280 Turretot (FR)
Inventeur : Rius, Jean-Michel
Les Beaux Sites Chemin Vicinal No 2
Magneglise
F-76133 Epouville (FR)

(74) Mandataire : Puit, Thierry et al
Centre de Recherches de Pont-à-Mousson
Service de Propriété Industrielle Boîte Postale
109
F-54704 Pont-à-Mousson Cédex (FR)

EP 0 304 385 B1

Jouve, 18, rue Saint-Denis, 75001 PARIS

## Description

L'invention a pour objet un dispositif pour le traitement thermique du col de préformes en matière thermoplastique et plus particulièrement un dispositif pour accroître la résistance mécanique et thermique du col d'une préforme en polyéthylènetéréphtalate (PET) selon le préambule de la revendication 1.

Dans le domaine de l'emballage, les récipients en PET biorienté sont à l'heure actuelle largement utilisés pour la commercialisation de certaines boissons gazeuses (limonades, sodas, jus de fruits gazeux, etc...) ou non (jus de fruits non carbonatés), de jus ou de sauces. Ces récipients doivent pouvoir subir sans déformations notables des conditions thermiques relativement sévères telles que celles rencontrées lors du remplissage du récipient par un liquide chaud ou telles que celles régnant lors de la pasteurisation du contenu liquide du récipient.

Cette large utilisation des récipients en PET est due au fait que le PET biorienté présente une bonne résistance mécanique et thermique, un bel aspect, une grande inertie chimique vis-à-vis des produits contenus dans les récipients et qu'il forme une barrière efficace aux gaz contenus dans les liquides et à l'oxygène de l'air (conservation des produits contenus sans oxydation).

Les récipients sont obtenus à partir d'une préforme, généralement en PET amorphe, portée à une température adéquate, puis introduite dans un moule et plaquée contre les parois de celui-ci par introduction d'un gaz sous pression. Au cours de ce moulage par soufflage, les parties du récipient qui ont été étirées sont biorientées. Mais les parties du récipient qui n'ont pas été biorientées, notamment le col et éventuellement le fond, ne présentent pas la même résistance thermique et mécanique que le reste du récipient. Ceci est gênant car le col doit conserver ses caractéristiques dimensionnelles pour permettre un bouchage étanche lorsque les récipients sont remplis par un liquide chaud ou subissent un traitement de pasteurisation.

Il est connu pour améliorer la résistance thermique et mécanique du col d'un récipient en PET de faire subir à ce col un traitement thermique ayant pour but d'augmenter son degré de cristallisation par augmentation de la densité de sa structure sphérolitique. Mais, du fait que le col du récipient est muni d'un filetage destiné au vissage d'un bouchon, l'épaisseur du col n'est pas uniforme et il se produit lors du traitement thermique des déformations locales qui empêchent un bouchage étanche.

Il est connu aussi d'introduire, lors du traitement thermique du col d'un récipient, un mandrin cylindrique d'un diamètre inférieur à celui du diamètre intérieur du col, puis de procéder au rétrécissement du col par refroidissement avec de l'air soufflé pour amener l'intérieur du col en contact avec le mandrin. Mais, si les inconvénients cités ci-avant sont évités, il n'en reste pas moins que l'apport des calories nécessaires au traitement thermique du col ne peut être strictement localisé sur le col et que des déformations locales peuvent apparaître sur le corps biorienté du récipient.

Il est connu encore d'appliquer un traitement thermique de renforcement non pas au col du récipient déjà fabriqué mais au col de la préforme, avant le moulage par soufflage de cette dernière. Pour ce faire, un bloc chauffant en matériau bon conducteur de la chaleur, présentant une cavité de forme conjuguée de celle du col d'une préforme de récipient, est appliqué sur le col d'une préforme pendant une durée suffisante pour provoquer une cristallisation complète du col. Le bloc chauffant est traversé par un mandrin coulissant cylindrique qui est inséré dans le col de la préforme. Mais, dans ce dispositif, on a un mauvais contact entre le bloc chauffant et le col de la préforme du fait que celui-ci a une forme compliquée due à la présence du filet de vissage. De plus, le sommet du filet qui est en contact avec la cavité du bloc chauffant est déformé car il reçoit un flux calorifique élevé. Enfin, avec ce dispositif, il est nécessaire d'avoir un type de bloc chauffant par type de col. Il est connu encore par le document Patent Abstracts of Japan, vol. 8, n° 12 (M-269) et JP-A-58 173 628 un dispositif pour le traitement thermique du col d'une préforme en polyester tel que le polyéthylène térephtalate. Ce dispositif est constitué d'une jupe de protection du corps de la préforme entraînant cette dernière en rotation autour de son axe de révolution, d'un mandrin monobloc en résine résistant à la chaleur inséré dans le col de la préforme et d'un moyeu de chauffage situé au niveau de col de la préforme.

Il est connu enfin par le document FR-A-2 429 660 un dispositif pour cristalliser le col d'un récipient par un traitement thermique. Il comprend un support sur lequel est placé le récipient, un élément de retenue introduit dans son col, un moyen de chauffage par rayonnement du col et un écran de protection de la partie du récipient située en dessous du col. Le récipient est mis en rotation par rapport au moyen de chauffage, soit par l'intermédiaire du support, soit par l'intermédiaire de l'élément de retenue.

La présente invention a pour but de proposer un dispositif de traitement thermique du col de préformes en polyéthylènetéréphtalate permettant de cristalliser ce col sans créer de déformations, en particulier dans sa zone d'extrémité libre qui doit être parfaitement plane pour assurer un bouchage étanche des récipients obtenus à partir de ces préformes.

A cet effet, l'invention a pour but un dispositif pour le traitement thermique du col d'une préforme en matériau thermoplastique tel que le polyéthylènetéréphtalate, comportant un mandrin d'axe vertical X-X, mobile en rotation autour de l'axe X-X, qui s'insère dans le col d'une préforme, une jupe de protection du corps de ladite préforme et un moyen de chauffage situé au niveau du col de la préforme caractérisé en ce que le mandrin est constitué d'un noyau central autour duquel sont disposées coaxialement une gaine intermédiaire en matériau isolant et une gaine extérieure en matériau bon conducteur de la chaleur.

D'autres développements avantageux du dispositif selon la présente invention font l'objet des revendications dépendantes.

D'autres caractéristiques et avantages de l'invention apparaîtront à la lecture de la description qui va suivre, donnée à titre d'exemple non limitatif, faite en référence aux dessins annexés parmi lesquels :

- la Fig. 1 représente une vue d'ensemble, en coupe, d'un dispositif selon l'invention ;
- la Fig. 2 représente, vue en coupe, à plus grande échelle, une partie du dispositif selon l'invention, qui s'insère dans le col d'une préforme.

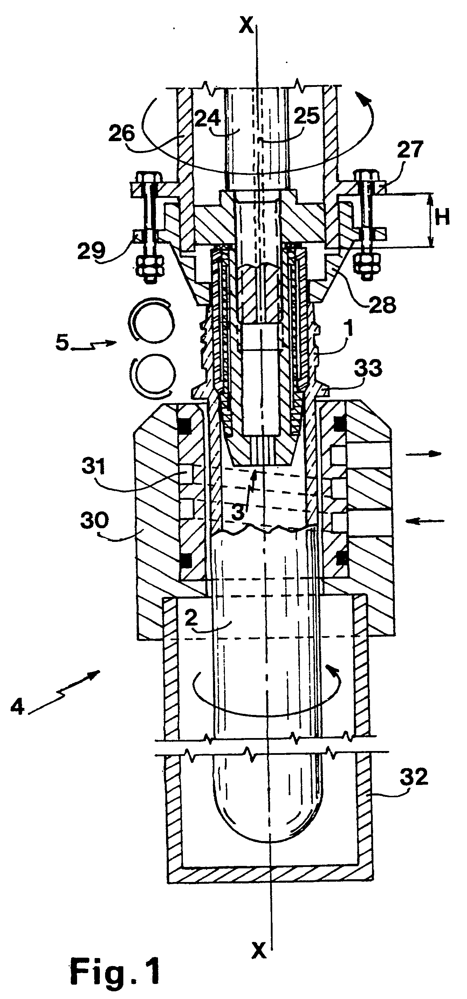

Le dispositif selon l'invention, représenté à la Fig. 1, utilisé pour le traitement thermique du col 1 d'une préforme 2 se compose d'un mandrin 3 de calibrage, d'une jupe 4 de protection et d'un dispositif de chauffage 5 à rayonnement infrarouge.

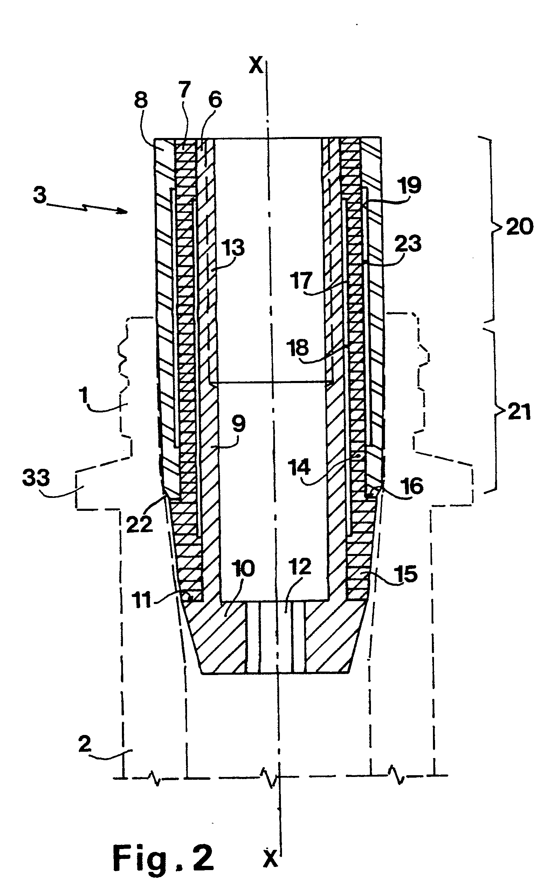

Le mandrin 3, représenté à la Fig. 2, est une pièce de révolution d'axe vertical X-X de forme générale cylindro-conique. Il comprend, en allant de l'axe X-X vers l'extérieur, un noyau central 6, une gaine 7 intermédiaire et une gaine 8 extérieure.

Le noyau central 6, d'axe X-X, réalisé en acier inoxydable, est constitué d'un tube 9 cylindrique terminé à son extrémité inférieure par un tronc de cône 10 qui converge vers le bas, dont le demi-angle au sommet est compris entre 10 et 20° et a de préférence une valeur de 15°. Le tronc de cône est accolé au tube 9 par sa grande base et son raccordement avec ce dernier forme un épaulement radial 11. Un trou 12, d'axe X-X, en forme de six pans creux est percé dans le tronc de cône 10 et débouche dans le tube 9 dans la moitié supérieure duquel est ménagé un taraudage 13.

La gaine 7 intermédiaire, coaxiale au noyau central 6, est réalisée en matériau isolant thermiquement ayant de bonnes caractéristiques mécaniques, tel qu'une résine thermodurcissable armée par des fibres de verre ou une céramique. Elle est constituée d'un tube 14 cylindrique, dont le diamètre interne est très légèrement supérieur au diamètre externe du tube 9 du noyau 6, terminé à son extrémité inférieure par un tronc de cône 15 qui converge vers le bas et dont le demi-angle au sommet est compris entre 6 et 7°. Le tronc de cône 15 est accolé au tube 14 par sa grande base et son raccordement avec ce dernier forme un épaulement radial 16. Le diamètre de la petite base du tronc de cône 15 est égal au diamètre de la grande base du tronc de cône 10 du noyau central 6. Un alésage 17, dont le diamètre est supérieur au diamètre interne du tube 14, est ménagé dans la paroi interne de ce dernier. La gaine 7 est disposée sans jeu autour du noyau central 6, son extrémité inférieure, constituée par le tronc de cône 15, étant en butée contre l'épaulement radial 11. L'alésage 17 du tube 14 et la surface extérieure du tube 9 du noyau central 6 forment une chambre 18 cylindrique fermée constituant une lame d'air isolante.

La gaine 8 extérieure, coaxiale au noyau central 6 et à la gaine 7 intermédiaire est réalisée en matériau bon conducteur de la chaleur tel qu'un bronze au béryllium. Son diamètre intérieur est légèrement supérieur au diamètre externe de la gaine 7 intermédiaire. Un alésage 19, dont le diamètre est supérieur au diamètre interne de la gaine 8, est ménagé dans la paroi interne de celle-ci. La surface extérieure de la gaine 8 présente successivement, à partir de son extrémité supérieure, une partie 20 cylindrique s'étendant sur la moitié de sa hauteur, dont le diamètre extérieur est égal au diamètre intérieur du col du récipient final, une partie 21 légèrement tronconique, convergente vers le bas dont le demi-angle au sommet est compris entre 30 minutes et 1°, et un chanfrein 22 dont le demi-angle au sommet est de 30°. La gaine 8 est disposée sans jeu autour de la gaine 7 intermédiaire, son extrémité inférieure étant en butée contre l'épaulement 16 de cette dernière. L'alésage 19 de la gaine 8 et la surface extérieure de la gaine 7 intermédiaire forment une chambre 23 cylindrique fermée constituant une lame d'air isolante.

Ainsi le mandrin 3 présente à partir de son extrémité inférieure trois parties tronconiques 10, 15 et 21 successives dont les angles au sommet sont décroissants et une partie 20 cylindrique.

Le mandrin 3 est fixé par son taraudage 13 à l'extrémité inférieure filetée d'un arbre 24, d'axe X-X, percé d'un trou 25 coaxial, entraîné en rotation par un dispositif non représenté, solidaire d'un manchon 26 cylindrique coaxial muni, à une distance H de son extrémité inférieure, d'une collerette 27 percée de trous équidistants. Le diamètre interne du manchon 26 est supérieur au diamètre externe de l'arbre 24.

Sur l'extrémité inférieure du manchon 26, en dessous de la collerette 27, est monté coulissant, un poids 28 d'une masse de 200 grammes environ, de forme cylindro-conique d'axe X-X dont la partie cylindrique a une hauteur H. Le poids 28 est muni d'une collerette 29 percée de trous équidistants et son extrémité inférieure conique entoure sans contact la partie 20 cylindrique du mandrin 3. Le manchon 26 et le poids 28 sont rendus solidaires par des boulons engagés dans les trous des collerettes 27 et 29. Les écrous ne sont pas serrés complètement de façon que le poids 28 puisse se déplacer en translation verticale par rapport au manchon 26 et par rapport au mandrin 3.

La jupe 4 de protection, constituée par une douille métallique 32 d'axe X-X, est fixée par son extrémité supérieure à l'extrémité inférieure d'une tête 30 refroidie par une circulation d'un fluide de refroidissement liquide ou gazeux à l'intérieur d'une cavité 31 hélicoïdale. Les diamètres intérieurs de la douille 32 et de la tête 30 sont supérieurs au diamètre extérieur du corps de la préforme 2. L'ensemble douille 32-tête 30 est mobile en translation selon l'axe X-X au moyen d'un dispositif non représenté.

Le fonctionnement du dispositif est le suivant. Les préformes 2 en provenance d'une réserve sont orientées col en haute et acheminées vers un poste de travail équipé de plusieurs dispositifs de traitement thermique identiques à celui décrit ci-avant. L'arbre 24 est abaissé et le mandrin 3 est introduit dans le col 1 de la préforme 2, jusqu'à ce que la partie 20 cylindrique du mandrin 3 soit enfoncée de 5 mm environ dans le col 1. Le diamètre extérieur de la partie 20 cylindrique du mandrin 3 est supérieur de 0,1 mm au diamètre intérieur du col 1. Le léger serrage du col 1 sur le mandrin 3, procuré par cette différence de diamètre, permet la fixation de la préforme 2 sur le mandrin. Puis la jupe 4 est relevée de façon à ce que l'extrémité supérieure de la tête 30 soit située quelques dixièmes de millimètres en dessous de la collerette 33 du col 1. Le mandrin 3 est mis en rotation au moyen de l'arbre 24 entraînant avec lui la préforme 2 dont le col 1 est situé au niveau du dispositif de chauffage à rayonnement infrarouge qui porte le col 1 à une température d'au moins 190°C (température de cristallisation du PET) ; de préférence, pour accroître la cadence de production, le chauffage est effectué à une température de 190 à 210°C pendant une durée d'environ une minute. Ce traitement provoque la cristallisation du PET. Durant le chauffage du col 1, celui-ci se ramollit et diminue de volume du fait que la cristallisation entraîne une augmentation de la densité du PET ; mais le poids 28, qui peut coulisser autour du manchon 26 et du mandrin 3, accompagne le col 1 ramolli au cours de son rétrécissement et pèse sur lui pour obtenir une planéité parfaite de l'extrémité supérieure du col 1. On effectue ensuite un refroidissement lent, de l'ordre de 20 secondes, pour obtenir une préforme 2 à goulot 1 cristallisé. La jupe 4 est ensuite abaissée et la préforme 2 séparée du mandrin 3.

Les avantages présentés par le dispositif suivant l'invention sont les suivants :
– le diamètre intérieur du col de la préforme est parfaitement défini par le mandrin 3 qui y est inséré ;
– la planéité de l'extrémité supérieure du col est obtenue grâce à l'action du poids 28, mobile, en contact avec cette extrémité durant toute la durée du traitement thermique au cours duquel le col se ramollit ;
– le trou 12 ménagé dans l'extrémité du mandrin 3 permet l'évacuation de l'air contenu dans la préforme par le tube 9 du mandrin et le trou 25 de l'arbre 24 qui débouche à l'air libre. Ainsi la préforme peut être mise en place commodément sur le mandrin et lors du chauffage du col, l'air dilaté par la chaleur peut s'échapper librement, ce qui évite de séparer la préforme du mandrin par la surpression créée par la dilation de l'air ;
– la partie de la préforme immédiatement placée sous le col est énergiquement refroidie par la circulation d'un fluide de refroidissement dans la tête 30, ce qui évite toute modification du matériau du corps de la préforme ;
– la gaine 7 réalisée en matériau isolant, ainsi que les lames d'air 18 et 23 ménagées dans le mandrin 3 évitent que la chaleur ne se propage dans toute la masse de celui-ci. Ainsi, seule la gaine 8 extérieure, en matériau bon conducteur de la chaleur, peut s'échauffer par conduction et répartir uniformément la chaleur sur le pourtour intérieur du col.

## Revendications

1. Dispositif pour le traitement thermique du col d'une préforme en matériau thermoplastique tel que le polyéthylènetéréphtalate, comportant un mandrin (3) d'axe vertical X-X, mobile en rotation autour de l'axe X-X, qui s'insère dans le col (1) d'une préforme (2), une jupe (4) de protection du corps de ladite préforme et un moyen de chauffage (5) situé au niveau du col (1) de la préforme (2) caractérisé en ce que le mandrin (3) est constitué d'un noyau (6) central autour duquel sont disposées coaxialement une gaine (7) intermédiaire en matériau isolant et une gaine (8) extérieure en matériau bon conducteur de la chaleur.

2. Dispositif suivant la revendication 1 caractérisé en ce que le mandrin (3) comporte deux chambres (18, 23) cylindriques fermées d'axe X-X disposées respectivement entre le noyau central (6) et la gaine (7) intermédiaire et entre la gaine (7) intermédiaire et la gaine (8) extérieure.

3. Dispositif suivant l'une des revendications 1 ou 2 caractérisé en ce que le mandrin (3) présente à partir de son extrémité inférieure trois parties tronconiques successives coaxiales, respectivement (10), (15) et (21), dont les angles au sommet sont décroissants et une partie (20) cylindrique dont le diamètre extérieur est égal au diamètre intérieur du col du récipient final obtenu à partir de la préforme (2).

4. Dispositif suivant les revendications 1 et 2 caractérisé en ce que le noyau (6) central du mandrin (3) est constitué d'un tube (9) cylindrique d'axe X-X terminé à l'une de ses extrémités par un tronc de cône (10) d'axe X-X, convergeant du côté opposé au tube (9), dont le demi-angle au sommet est compris entre 10 et 20° et a de préférence une valeur de 15°, un trou (12) d'axe X-X, débouchant dans le tube (9), étant ménagé dans ledit tronc de cône (10), le raccordement entre ce dernier et le tube (9) formant un épaulement (11) radial.

5. Dispositif suivant les revendications 1 et 2 caractérisé en ce que la gaine (7) intermédiaire, coaxiale au noyau central (6), réalisée en un matériau isolant thermiquement, est constituée d'un tube (14) cylindrique d'axe X-X terminé à l'une de ses extrémités par un tronc de cône (15), convergeant du côté opposé au tube (14), dont le demi angle au sommet est compris entre 6 et 7°, le raccordement entre le tube (14) et le tronc de cône (15) formant un épaulement (16) radial.

6. Dispositif suivant les revendications 1 et 2 caractérisé en ce que la surface extérieure de la gaine (8), extérieure, réalisée en matériau bon conducteur de la chaleur, présente successivement à partir de l'une de ses extrémités une partie (20) cylindrique s'étendant sur la moitié de sa hauteur, une partie (21) légèrement tronconique dont le demi-angle au sommet est compris entre 30 minutes et 1° et un chanfrein (22) dont le demi-angle au sommet est de 30°.

7. Dispositif suivant l'une des revendications 1 à 6 caractérisé en ce que le mandrin (3) est solidaire, par son extrémité opposée au tronc de cône (10), d'un arbre (24) d'axe X-X, percé d'un trou (25) coaxial, animé d'un mouvement de rotation autour de ce même axe X-X.

8. Dispositif suivant la revendication 7 caractérisé en ce que l'arbre (24) est solidaire d'un manchon (26) cylindrique, de diamètre supérieur à celui de l'arbre, coaxial, muni à une distance (H) de son extrémité inférieure d'une collerette (27) percée de trous équidistants.

9. Dispositif suivant les revendications 7 et 8 caractérisé en ce que, autour de l'extrémité inférieure du manchon (26), sous la collerette (27), est monté coulissant un poids (28) de forme cylindroconique, dont la partie cylindrique a une hauteur (H).

10. Dispositif suivant la revendication 1 caractérisé en ce que la jupe (4) de protection est constituée d'une douille (32) d'axe X-X fixée par son extrémité supérieure à une tête (30) refroidie par une circulation d'un fluide de refroidissement à l'intérieur d'une cavité (31) hélicoïdale.

11. Dispositif suivant la revendication 10 caractérisé en ce que les diamètres intérieurs de la douille (32) et de la tête (30) sont supérieurs au diamètre extérieur du corps de la préforme (2).

**Ansprüche**

1. Gerät zum Wärmebehandeln der Hälse von Vorformlingen aus thermoplastischem Material wie Polyethylenterephthalat mit einem Dorn (3) mit einer Vertikalachse X-X, der drehbar um die Achse X-X beweglich ist und sich in den Hals (1) eines Vorformlings (2) einschiebt, einer Schutzverkleidung (4) für den Körper des Vorformlings und einer in gleicher Höhe mit dem Hals (1) des Vorformlings (2) angeordneten Heizvorrichtung (5), **dadurch gekenn-**

**zeichnet**, daß der Dorn (3) aus einem zentralen Kern (6) gebildet ist, um welchen eine Zwischenummantelung (7) aus isolierendem Material und eine äußere Ummantelung (8) aus einem gut wärmeleitenden Material koaxial angeordnet sind.

2. Gerät nach Anspruch 1, **dadurch gekennzeichnet**, daß der Dorn (3) zwei zylindrische geschlossene Kammern (18, 23) mit der Achse X-X umfaßt, die zwischen dem zentralen Kern (6) und der Zwischenummantelung (7) bzw. zwischen der Zwischenummantelung (7) und der äußeren Ummantelung (8) angeordnet sind.

3. Gerät nach einem der Ansprüche 1 oder 2, **dadurch gekennzeichnet**, daß der Dorn (3) ausgehend von seinem unterem Ende drei kegelstumpfartige, aufeinanderfolgende koaxiale Abschnitte (10) bzw. (15) bzw. (21) mit abnehmenden Spitzenwinkeln aufweist sowie einen zylindrischen Abschnitt (20), dessen Außendurchmesser gleich dem Innendurchmesser des Halses des fertigen Behälters ist, der aus dem Vorformling gebildet wird.

4. Gerät nach den Ansprüchen 1 und 2, **dadurch gekennzeichnet**, daß der zentrale Kern (6) des Dorns (3) aus einem zylindrischen Rohr (9) mit der Achse -X-X gebildet ist, das an einem seiner Enden mit einem Kegelstumpf (10) mit der Achse X-X abschließt, dessen dem Rohr (9) entgegengesetzte Seite konvergiert und dessen halber Spitzenwinkel zwischen 10 und 20° liegt und vorzugsweise einen Wert von 15° aufweist, wobei ein in das Rohr (9) mündendes Loch (12) mit der Achse X-X in dem Kegelstumpf (10) angeordnet ist und wobei die Verbindung zwischen letzterem und dem Rohr (9) eine radiale Schulter (11) bildet.

5. Gerät nach den Ansprüchen 1 und 2, **dadurch gekennzeichnet**, daß die koaxial zum zentralen Kern (6) angeordnete Zwischenummantelung (7) aus wärmeisolierendem Material von einem zylindrischen Rohr (14) mit der Achse X-X gebildet ist, das an einem seiner Enden mit einem Kegelstumpf (15) abschließt, dessen dem Rohr (14) entgegensetzte Seite konvergiert und dessen halber Spitzenwinkel zwischen 6 und 7° beträgt, wobei die Verbindung zwischen dem Rohr (14) und dem Kegelstumpf (15) eine radiale Schulter (16) bildet.

6. Gerät nach den Ansprüchen 1 und 2, **dadurch gekennzeichnet**, daß die Außenfläche der aus gut wärmeleitendem Material gebildeten äußeren Ummantelung (8) ausgehend von einem ihrer Enden nacheinander einen zylindrischen Abschnitt (20) aufweist, der sich über die Hälfte ihrer Höhe erstreckt, einen leicht kegelstumpfartigen Abschnitt (21), dessen halber Spitzenwinkel zwischen 30 Minuten und 1° beträgt sowie eine Abschrägung (22), deren halber Spitzenwinkel 30° beträgt.

7. Gerät nach einem der Ansprüche 1 bis 6, **dadurch gekennzeichnet**, daß der Dorn (3) durch sein dem Kegelstumpf (10) entgegengesetztes Ende mit einer Welle (24) mit der Achse X-X verbunden ist, welche mit einem koaxialen Loch (25) durchbohrt ist und zu einer Drehbewegung um dieselbe Achse X-X angetrieben wird.

8. Gerät nach Anspruch 7, **dadurch gekennzeichnet,** daß die Welle (24) mit einer zylindrischen koaxialen Hülse (26) verbunden ist, deren Durchmesser größer ist als derjenige der Welle und die in einem Abstand (H) zu ihrem unteren Ende einen Flansch (27) aufweist, der mit in gleichem Abständen angeordneten Löchern durchbohrt ist.

9. Gerät nach den Ansprüchen 7 und 8, **dadurch gekennzeichnet,** daß um das untere Ende der Hülse (26) unter dem Flansch (27) ein zylinderkonisch geformtes Gewicht (28) gleitend gelagert ist, dessen zylindrischer Abschnitt eine Höhe (H) aufweist.

10. Gerät nach Anspruch 1, **dadurch gekennzeichnet,** daß die Schutzverkleidung (4) eine Hülse (32) mit der Achse X-X umfaßt, die mit ihrem oberen Ende an einem Kopf (30) befestigt ist, welcher durch Zirkulation einer Kühlflüssigkeit im Inneren eines spiralförmigen Hohlraums (31) gekühlt wird.

11. Gerät nach Anspruch 10, **dadurch gekennzeichnet,** daß die Innendurchmesser der Hülse (32) und des Kopfes (30) größer sind als der Außendurchmesser des Vorformling-Körpers (2).

## Claims

1. Apparatus for the heat treatment of the neck of a preform made of a thermoplastic material such as polyethyleneterephthalate, comprising a mandrel (3) having a vertical axis X-X which is able to rotate about the axis X-X, which is inserted into the neck (1) of a preform (2), a skirt (4) for the protection of the body of the said preform and heating means (5) situated at the level of the neck (1) of the preform (2), characterised in that the mandrel (3) is constituted by a central core (6) around which are coaxially arranged an intermediate sheath (7) made of an insulating material and an exterior sheath (8) made of a material which is a good heat conductor.

2. Apparatus according to Claim 1, characterised in that the mandrel (3) comprises two closed cylindrical chambers (18, 23), having an axis X-X, arranged respectively between the central core (6) and the intermediate sheath (7) and between the intermediate sheath (7) and the exterior sheath (8).

3. Apparatus according to one of Claims 1 or 2, characterised in that from its lower end, the mandrel (3) has three successive coaxial truncated components, respectively (10), (15) and (21), whose angles of convergence successively decrease, and a cylindrical component (20) whose exterior diameter is equal to the interior diameter of the neck of the final container obtained from the preform (2).

4. Apparatus according to Claims 1 and 2, characterised in that the central core (6) of the mandrel (3) is constituted by a cylindrical tube (9) with an axis X-X terminating at one of its ends in a truncated cone (10), having an axis X-X, converging on the side opposite the tube (9), whereof the half-angle of convergence is comprised between 10 and 20° and preferably has a value of 15°, a hole (12), on the axis X-X, opening into the tube (9), being provided in said truncated cone (10), the connection between the latter and the tube (9) forming a radial shoulder (11).

5. Apparatus according to Claims 1 and 2, characterised in that the intermediate sheath (7), which is coaxial with the central core (6), made from a thermally insulating material, is constituted by a cylindrical tube (14), on the axis X-X, terminating at one of its ends in a truncated cone (15), converging on the side opposite to the tube (14), whereof the half-angle of convergence is comprised between 6° and 7°, the connection between the tube (14) and the truncated cone (15) forming a radial shoulder (16).

6. Apparatus according to Claims 1 and 2, characterised in that the exterior surface of the exterior sheath (8), made from a material which is a good conductor of heat, comprises in succession from one of its ends, a cylindrical component (20) extending over half of its height, a slightly truncated component (21) whereof the half-angle of convergence is between 30 minutes and 1° and a chamfer (22) whereof the half-angle of convergence is 30°.

7. Apparatus according to one of Claims 1 to 6, characterised in that the mandrel (3) is integral, by its end opposite the truncated cone (10), with a shaft (24) on the axis X-X, through which a coaxial hole (25) passes, the shaft being set in rotation about this same axis X-X.

8. Apparatus according to Claim 7, characterised in that the shaft (24) is connected to a cylindrical sleeve (26), whose diameter is greater than that of the coaxial shaft, and which is provided at a distance (H) from its lower end, with a flange (27) bored with equidistant holes.

9. Apparatus according to Claims 7 and 8, characterised in that around the lower end of the sleeve (26), under the flange (27), a cylindro-conical shaped weight (28) is slideably mounted, whereof the cylindrical part has a height (H).

10. Apparatus according to Claim 1, characterised in that the protection skirt (4) is constituted by a casing (32) on the axis X-X, fixed by its upper end to a head (30) cooled by a circulation of a cooling fluid inside a helical cavity (31).

11. Apparatus according to Claim 10, characterised in that the inner diameters of the casing (32) and of the head (30) are greater than the exterior diameter of the body of the preform (2).

**Fig.1**

# Fig.2